# EUROPEAN PATENT APPLICATION

(11) **EP 0 838 603 A1**
(43) Date of publication of application: **29.04.1998**
(21) Application number: 97308424.7
(22) Date of filing: 22.10.1997
(51) Int. Cl.: F16D 65/16

(54) **Actuator for a brake device**

(30) Priority: 24.10.1996 GB 9622147
(71) Applicant: WICHITA COMPANY LIMITED, Bedford MK42 9RD (GB)
(72) Inventor: Hakon, Ian, Putnoe, Bedford, MK41 8BL (GB)
(74) Representative: W.P. THOMPSON & CO.

(57) **Abstract**

An actuator for a brake device includes a reciprocating piston assembly for actuating the brake device. The piston assembly has first and second working areas, and hydraulic or pneumatic fluid may be delivered to either or both of the areas to provide first and second torque ranges of the actuator.

## Description

This invention relates to brake devices in which the brake is actuated by fluid powered actuators. Each actuator typically comprises a reciprocating piston in a housing, and is operable to cause the piston to bear against a friction material disc, which in turn bears against a brake disc mounted on the shaft to be braked. The brake device usually takes the form of an annular casing mounting several actuators in a ring round the shaft.

In some applications, such as brakes for paper reels, there is a need for a large range of torque outputs from the brake. This has been achieved by providing several actuators of different sizes, and by selecting various combinations of actuators to provide the torque range required. This leads to a complicated and expensive device.

According to the present invention, there is provided an actuator for a brake device comprising a housing and a piston assembly mounted in the housing for reciprocal movement therein to effect actuation of the brake device, the housing including means for delivering pressurised fluid to the piston assembly for operating the actuator, the piston assembly being arranged to present first and second working areas to the fluid, and the actuator being operable to cause supplied fluid to act selectively upon the first and/or the second working area for providing first and second torque ranges of the actuator.

Preferably, the second torque range is provided by fluid acting upon the first and second areas. Thus for example fluid may be delivered to act upon the first area at low pressures, and the actuator may include means responsive to the fluid pressure for causing a fluid passage to open leading to the second area at higher pressures, such that the fluid acts upon a larger working area which comprises the first and the second area.

In another example the piston assembly may comprise first and second portions, and the actuator may include means for selectively preventing the fluid from acting upon the second working area of the piston, by means such as a solenoid coil or a mechanical stop member locking the second piston to the housing, for providing the first torque range, which may be released for providing the second torque range.

In a further example the delivery means includes means for supplying fluid separately to first and second areas such that either the first or second or both areas may be acted upon by the fluid. In this case, the areas acted upon may urge the piston in the same direction, or in opposite directions.

Preferably, the fluid comprises hydraulic or pneumatic fluid.

The invention will now be described with reference to the accompanying drawings, in which:
Figures 1a and 1b are fragmentary cross-sectional views of a brake device suitable for use with an actuator according to the invention;
Figure 2 is a cross-sectional view of an actuator according to one embodiment of the invention;
Figures 3 and 4 show the actuator of Figure 2 in other positions;
Figure 5 is a cross-sectional view of an actuator according to another embodiment of the invention; and
Figures 6, 7 and 8 are schematic cross sectional views of actuators in accordance with further embodiments of the invention.

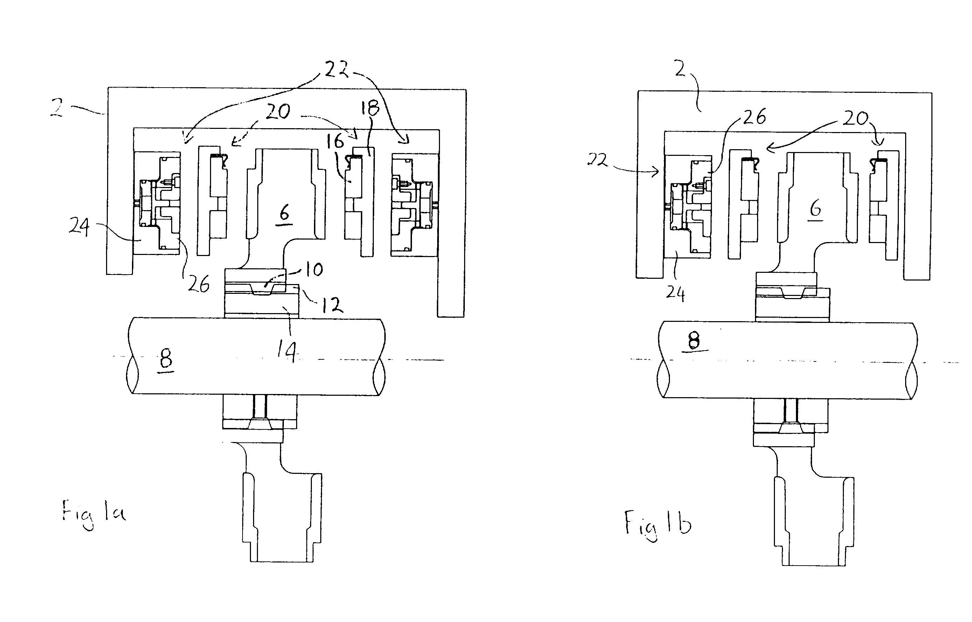

Referring to Figure 1a, a brake device includes an actuator casing 2 which surrounds a brake disc 6. The brake disc 6 is mounted on a shaft 8 to be braked by means of teeth 10 which interengage with corresponding teeth 12 of a toothed wheel 14 bolted to the shaft 8. The brake device includes friction discs 20 comprising friction material pads 16 mounted by casings 18. These are mounted either side of the brake disc 6 and adjacent thereto and are movable in a direction parallel to the axis of the shaft 8 towards the brake disc to effect braking.

The friction discs 20 are each operated by a plurality of actuators 22 mounted at circumferentially spaced positions around the casing 2. The actuators comprise pistons 26 mounted for reciprocal movement in housings 24. When the pistons 26 extend, the friction discs 20 are urged towards the brake disc 6. In an alternative arrangement shown in Figure 1b, actuators 22 are provided on only one side of the casing 2. (In the Figures, clearances are exaggerated for clarity).

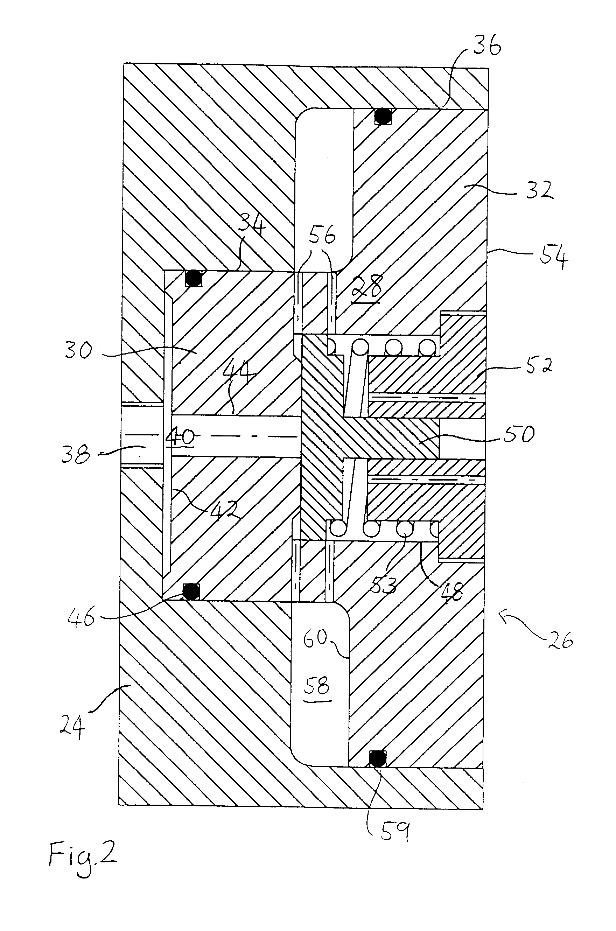

Referring now to Figure 2, an actuator 22 comprises a housing 24 and a piston assembly 26. The piston assembly 26 includes a body 28 which is "T" shaped in cross-section, with a stem portion 30 of constant narrow cross-section and head portion 32 of constant wider cross-section. The housing 24 is correspondingly shaped closely to fit the outer circumferential edges 34, 36 of the stem 30 and head 32 portions.

The housing 24 includes a passage 38 for supplying fluid, for example hydraulic fluid, to the piston assembly 26. The passage 38 communicates with a first chamber 40 formed by a depression in the end face 42 of the stem portion 30 of the piston body 28, which provides a first working area, and an axial passage 44 therein. This chamber 40 is sealed at the interface between the housing 24 and the piston 26 by a seal 46. The head portion 32 of the piston body 28 also includes an axial bore 48 of wider cross-section, which contains a shuttle valve member 50 and a valve seat member 52. The valve member 50 is biased away from the seat 52 by means of a helical spring 53 to close the passage 44 in the stem portion 30. The valve seat 52 is secured in the head portion 32, and is coplanar with the end face 54 of the head portion 32.

The piston body 28 includes a plurality of radial passages 56 for providing communication between the axial passage 44 and an annular chamber 58 formed between the inner face 60 of the head portion 32, which provides a second working area of the piston body 28, and the housing 24. Such communication is effected when the valve member 50 is urged against the valve seat 52 against the bias of the spring 53. The annular chamber 58 is sealed at the interface of the head portion 32 and the housing 24 by a seal 59.

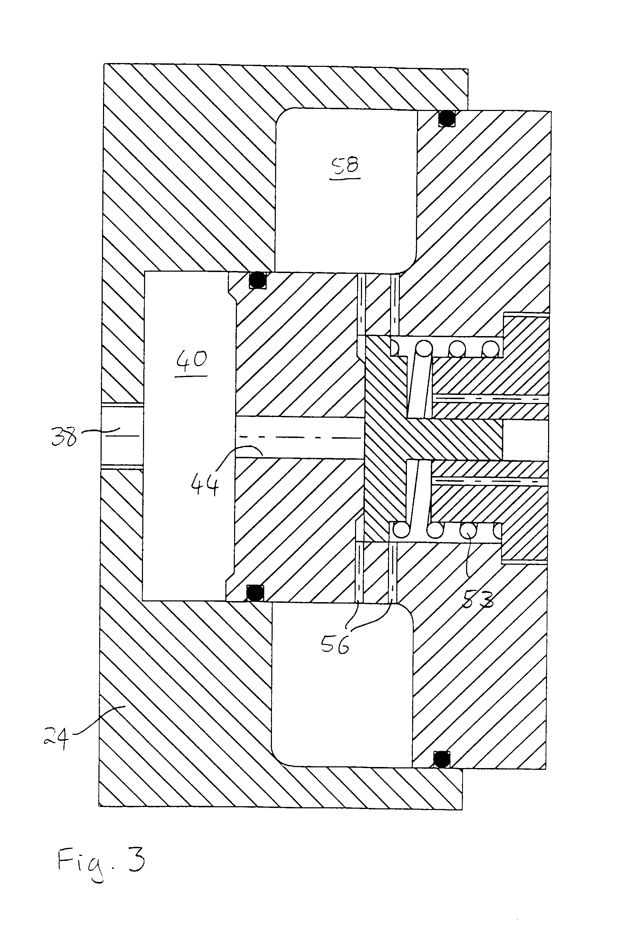

In use of the brake device, fluid is supplied via the passage 38 to the chamber 40. The fluid pressure on the first working area 42 of the piston assembly 26 can be controlled to provide a first force range for moving the piston assembly out of the housing 24. Figure 3 shows the piston 26 in the fully extended position. When the piston 26 is extended in this manner, it bears against the associated friction disc 20, which is urged into contact with the brake disc 6 to brake the shaft.

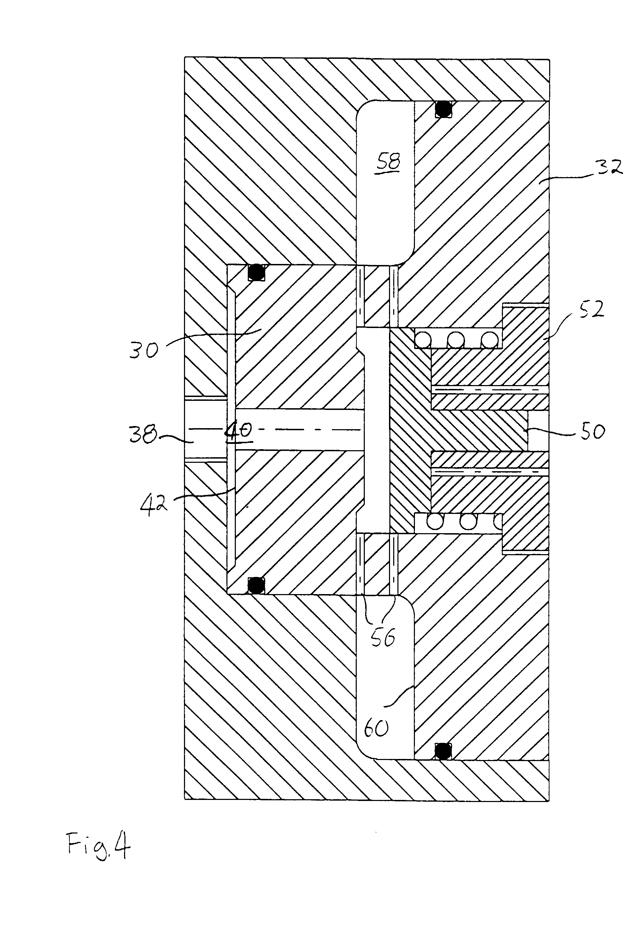

If a greater actuating force is required in order to provide a greater brake torque, fluid of a higher pressure is supplied via the passage 38. The pressure within the chamber 40 now overcomes the bias of the spring 53 to urge the valve member 50 towards the valve seat 52 such that the fluid may escape through the radial passages 56 into the annular chamber 58. This position is shown in Figure 4. The fluid now acts upon the second working area 60 of the piston body 28 as well as the first working area 42 to provide a second range of actuator forces greater than the first range. The output from the piston is increased by the ratio of the working areas, which may for example be about 4:1.

The actuator may be controlled by an automatic control system which detects the increase in effective brake torque when the valve opens. The control system may then reduce the fluid pressure to compensate for this, without the pressure dropping below that required to open the valve, such that a smooth force transition may be achieved. Similarly, when the pressure is reduced sufficiently such that the valve closes, the control system may increase the fluid pressure to compensate for the change in working area and to achieve a smooth transition.

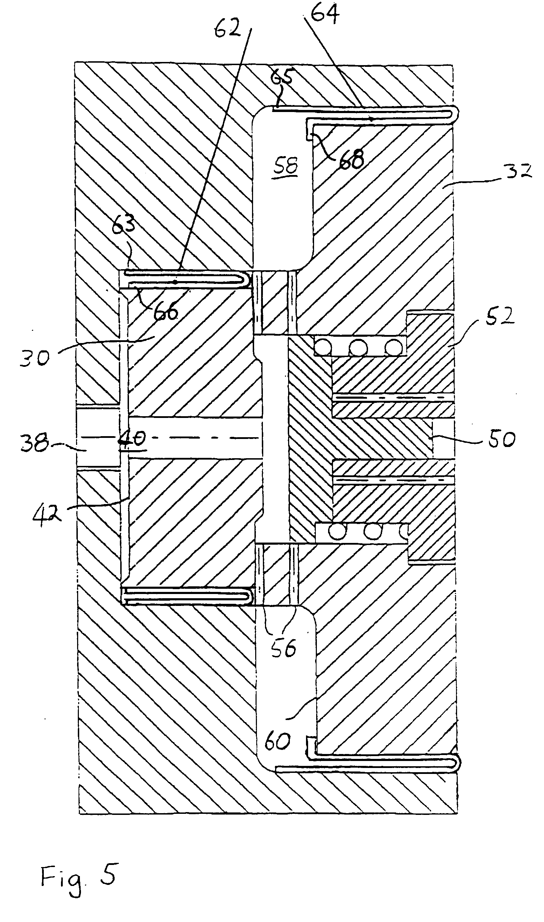

In figure 5, the seals between the piston body and the housing are rolling diaphragm type seals 62, 64. These each comprise annular sheet members, for example of rubber, polymer or fabric, which are attached at one edge 63, 65 to the inner surface of the housing 24, and at the other edge 66, 68 to the outer surface of the piston body stem portion 30 or head portion 32 respectively.

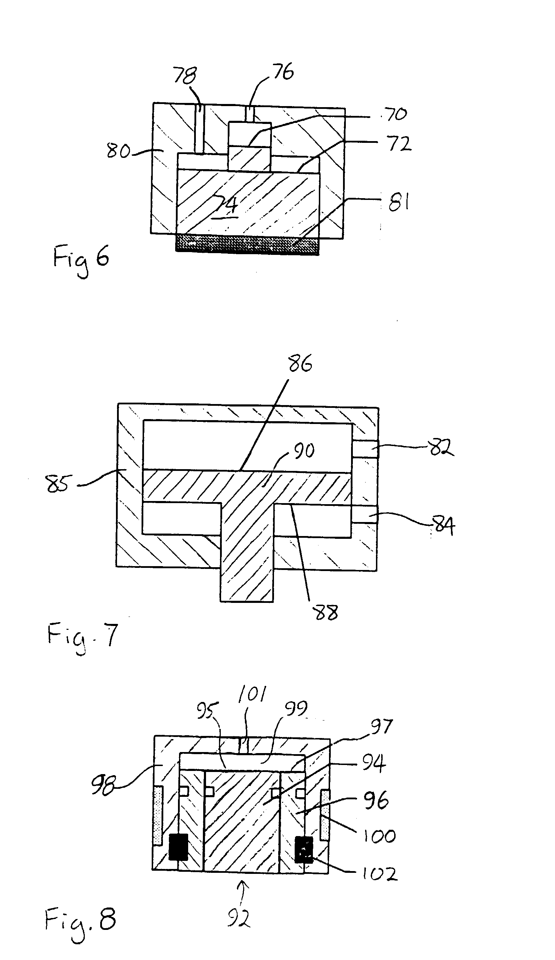

Referring to Figure 6, in another embodiment of the invention, fluid is supplied separately to either the first 70 and/or the second 72 working areas of a piston 74 via passages 76 and 78 respectively in a housing 80. The piston 74 includes a friction material pad 81.

In Figure 7, fluid is also supplied via separate passages 82 and 84 in a housing 85 to first and second areas 86 and 88 of a piston 90. However, in this example, the working areas oppose each other. Thus in this case, a first range of forces is achieved by supplying fluid to both the first and second areas 86, 88, and the second greater range of forces is achieved by supplying fluid to only the first area 86.

In Figure 8, the piston 92 has inner and outer portions 94, 96 presenting first 95 and second 97 working areas respectively to a chamber 99 supplied with fluid via a passage 101 in the housing 98. The housing 98 includes a stop means such as a solenoid 100 or mechanical stop 102 which is/are operable to prevent the outer portion 96 from reciprocating. Therefore the first range of forces is achieved by operating the stop means 100, 102 such that the fluid acts only on the first area 95, and the second range is provided by releasing the stop means 100, 102 such that the fluid acts upon the first 95 and second 97 areas.

Whilst various embodiments of the invention have been described, it will be appreciated that modification may be made without departing from the scope of the invention. For example, the actuator may comprise close fitting components rather than the seals shown in Figures 2, 3 and 4. Also other internal or external devices may be used to switch between the working areas of the piston.

## Claims

1. An actuator for a brake device comprising a housing and a piston assembly mounted in the housing for reciprocal movement therein to effect actuation of the brake device, the housing including means for delivering pressurised fluid to the piston assembly for operating the actuator, the piston assembly being arranged to present first and second working areas to the fluid, and the actuator being operable to cause supplied fluid to act selectively upon the first and/or the second working area for providing first and second torque ranges of the actuator.

2. An actuator as claimed in claim 1, in which the first torque range is provided when the fluid acts upon the first working area only, and the second torque range is provided when the fluid acts upon the first and second areas.

3. An actuator as claimed in claim 2, in which the means for delivering pressurised fluid to the piston assembly is arranged to deliver the fluid to the first working area, the actuator including means responsive to the fluid pressure for causing a fluid passage to open between the first and second working areas when the fluid pressure reaches a predetermined value, such that, at pressures above the predetermined value, the fluid acts upon a working area which comprises the first and the second working areas.

4. An actuator as claimed in claim 2, in which the piston assembly comprises first and second portions, and the actuator including means for selectively preventing the fluid from acting upon the second working area of the piston for providing the first torque range, which means may be released to allow the fluid to act upon both the first and second areas for providing the second torque range.

5. An actuator as claimed in claim 1 or 2, in which the delivery means includes means for supplying fluid separately to the first and second working areas, such that either the first or second or both areas may be acted upon by the fluid.

6. An actuator as claimed in claim 5, in which the areas acted upon urge the piston in the same direction, or in which the area acted upon urge the piston in opposite directions.

7. An actuator as claimed in any preceding claim, in which the fluid comprises hydraulic or pneumatic fluid.
